(19) Europäisches Patentamt
European Patent Office
Office européen des brevets

(11) Veröffentlichungsnummer: **0 050 354**
**B1**

(12) # EUROPÄISCHE PATENTSCHRIFT

(45) Veröffentlichungstag der Patentschrift: **29.05.85**

(51) Int. Cl.⁴: **C 04 B 14/00**

(21) Anmeldenummer: **81108516.6**

(22) Anmeldetag: **19.10.81**

(54) **Färbemittel.**

(30) Priorität: **20.10.80 DE 3039527**

(43) Veröffentlichungstag der Anmeldung:
**28.04.82 Patentblatt 82/17**

(45) Bekanntmachung des Hinweises auf die Patenterteilung:
**29.05.85 Patentblatt 85/22**

(84) Benannte Vertragsstaaten:
**AT BE DE FR GB IT LU NL SE**

(56) Entgegenhaltungen:
**EP-A-0 011 581**
**DE-A-2 315 400**
**DE-A-2 910 374**
**FR-A-2 272 962**

**Die Akte enthält technische Angaben, die nach dem Eingang der Anmeldung eingereicht wurden und die nicht in dieser Patentschrift enthalten sind.**

(73) Patentinhaber: **Chemische Werke Brockhues AG, Mühlstrasse 118, D-6229 Walluf (DE)**

(72) Erfinder: **Jungk, Axel Ekkehard, Dr.Dipl.-Chem., Kranichstrasse 22, D-6085 Nauheim (DE)**

(74) Vertreter: **Fürniss, Peter, Maximilianstrasse 58, D-8000 München 22 (DE)**

**EP 0 050 354 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung eines Färbemittels für zementhaltige Gegenstände, die der Witterung ausgesetzt sind, welches eine oberflächenaktive Substanz neben Pigmenten und gegebenenfalls anderen üblichen Zusätzen enthält.

Unter Färbemitteln werden Zubereitungen aus einen oder mehreren Pigmenten, beispielsweise Manganoxid, Eisenoxid und Ruß, wasserlöslichen oberflächenaktiven Substanzen und gegebenenfalls Hydrophobiermitteln und anderen Zusatzstoffen, verstanden.

Zementhaltige Gegenstände im Rahmen dieser Beschreibung sind beispielsweise Teile aus Beton, wie Betonsteine, Betonplatten, Betondachsteine (Betondachpfannen), Betonverbundsteine, Betonpflastersteine und auch durch Fasern verstärkte Stoffe, wie Zementasbestplatten, Zementasbestrohre, Zementasbestfensterbänke und andere, wobei Asbest auch durch anderes Fasermaterial ersetzt sein kann. Zementhaltige Gegenstände im Sinne der Erfindung können jedoch auch ungeformte Teile, wie z. B. Straßennutzschichten, sein.

Zementhaltige Gegenstände im Sinne dieser Beschreibung werden im folgenden der Einfachheit halber als Beton bezeichnet.

Es ist eine große Anzahl von oberflächenaktiven Stoffen mit zum Teil chemisch völlig verschiedenen Strukturen bekannt. Im Rahmen der Erfindung eignen sich jedoch nur solche oberflächenaktiven Substanzen, deren Oberflächenaktivität beim Aushärten im Beton irreversibel verloren geht.

In vielen Fällen hat es sich als wünschenswert erwiesen, Beton einzufärben. Als Beispiele seien genannt: bunte Fassadenplatten, farbige Pflastersteine und schwarze sowie rote Dachsteine. Zuerst wurden zur Einfärbung von Beton Pulverpigmente eingesetzt, die mit Zement und Wasser und gegebenenfalls Sand und/oder fasrigen Stoffen und gegebenenfalls anderen Zusatzstoffen sorgfältig vermischt und anschließend weiterverarbeitet wurden.

Pigmente fungieren bautechnologisch als inerte Füllstoffe. Die Teilchengrößenverteilung der eingesetzten Pigmente hat auf die Betonfestigkeit Einfluß. Ein zu hoher Pigmenteinsatz verringert beispielsweise die Betonfestigkeit. Dies führt dazu, daß beispielsweise zur Schwarzeinfärbung von Beton zur Erzielung eines vollen Scharztones statt großer Mengen des groben, chemisch unbeständigen Eisenoxidpigmentes geringe Mengen eines feinteiligen Kohlenstoffpigmentes, nämlich Ruß, als Pigment eingesetzt werden.

Der Einsatz von Pulverpigmenten wurde im Lauf der Zeit von der gewerbehygienischen Seite her problematisch. Gerade in den Betonfabriken führt ihr Einsatz zu einer unerträglichen Verschmutzung von Personal und Fabrik. Besonders ausgeprägt zeigt sich diese Verschmutzung beim Einsatz pulvrigen Rußes, der üblicherweise von Hand dosiert wurde. Die Beseitigung der Pigmentverpackung stellte hierbei ebenfalls ein Abfallproblem dar.

Ein Fortschritt gegenüber dem Einsatz unbehandelter Pigmentpulver zur Einfärbung von Beton wurde durch die Verwendung staubgehemmter fester bzw. flüssiger oder pastöser Zubereitungen aus Pigmenten und allgemein bekannten wasserlöslichen oberflächenaktiven Substanzen sowie Wasser erzielt. Staub- und Verschmutzungsprobleme wurden hierdurch verringert. Daneben eigneten sich gerade diese Pigmentpräparationen für eine automatische Dosierung.

Die Einfärbung von Beton mit Einfärbemitteln gemäß dem Stand der Technik weist Nachteile auf:

Der Aushärtevorgang des Betons führt je nach Überschußwasser auf der Oberfläche des Betons und je nach Verdichtungsgrad des Betons zu Poren in ihm und seiner Oberfläche. Weitere Poren entstehen durch das Herauslösen des noch freien Calciumoxids bzw. hydroxids aus dem Beton durch das Wasser, welches beispielsweise durch Regen, Bewässerung oder Tau auf und in den Beton gelangen kann und anschließend, während es eine Diffusion der löslichen Ionen aus dem Beton heraus verursacht, durch einen Verdunstungsprozeß wieder aus Betonkapillaren austritt. Hierbei verursacht das Wasser dichte Ausblühungen, die im Laufe der Zeit carbonatisieren und die ursprüngliche Betoneinfärbung überdecken können.

Aus der DE-A 2 315 400 ist ein gefärbtes mineralisches körniges Material bekannt. Dieses enthält auf der Oberfläche einen Pigmentfarbstoff in Form handelsüblicher Pigmentpräparationen sowie einen Überzug eines aus einer wäßrigen Kunststoffdispersion aufgetragenen Polymerisatfilms. Diese bekannten Pigmentpräparationen enthalten neben einem Farbpigment und Wasser einen geringen Anteil eines Netzmittels.

Die bekannte Verwendung von oberflächenaktiven Stoffen kann jedoch auch dazu führen, daß im Laufe der Bewitterung und des daraus resultierenden Ausblühungsprozesses die inerten feinen und feinsten Füllstoffe, die ja die Pigmente sind, benetzen und aus dem Beton durch seine Poren herausgetragen werden. Obwohl ein solches Heraustragen des Pigments aus dem Beton nur relativ selten erfolgt und sich solche Einfärbemittel in Form ihrer Präparationen hervorragend bewährt haben, ist dieses Phänomen der Entfärbung beim Zusammentreffen besonders ungünstiger Umstände nicht immer zu vermeiden. Solche Schwierigkeiten treten je nach Porosität und Härte der Betonoberfläche mehr bei den ganz feinteiligen Pigmenten als bei den gröberen auf.

Zur Betonpigmentierung ist die Verwendung von Ruß besonders vorteilhaft und wünschenswert, denn eine tiefschwarze Einfärbung des Betons kann nur mittels Ruß vorgenommen werden. Zur Erzielung von Grautönen benötigt man bei Verwendung von Rußpigmenten nur circa 10% der Menge,

die in Form von Eisenoxidschwarz gebraucht würde. Dies ist insbesondere im Beton bei tiefgrauen bzw. schwarzen Einfärbungen vorteilhaft und sogar notwendig, da die hierzu nötige Menge Eisenoxidpigment die Festigkeit des Betons beeinträchtigen würde, wogegen mit der verwendeten viel geringeren Menge an Rußpigment eine negative Beeinflussung der Betonfestigkeit nachweislich nicht gegeben ist. Eine solche Einsparung an Schwarzpigment zeigt die überlegene Wirtschaftlichkeit des Rußes. Hervorzuheben ist weiter seine chemische Beständigkeit, die der des Eisenoxid-Schwarzes überlegen ist.

Aus denselben Gründen ist es auch vorteilhaft, Ruß in Pigmentgemischen, beispielsweise in Brauntönen, einzusetzen. Jedoch kann bei der Herstellung eines Braunpigmentes durch Vermischen von Ruß mit Eisenoxidrot unter sehr ungünstigen Bedingungen das Pigment durch äußere Einflüsse entmischt werden, so daß bei zu hoher Wasserkonzentration und großer Porosität die ehemals braune Betonoberfläche rot wird.

Aufgabe der Erfindung ist es, die vorbeschriebenen Nachteile der bekannten Einfärbemittel für Beton zu vermeiden und insbesondere die Vorteile des Einsatzes von Ruß als Bestandteil von Einfärbemitteln für Beton voll zur Geltung zu bringen. Diese Aufgabe wird erfindungsgemäß dadurch gelöst, daß das Färbemittel der eingangs genannten Gattung als oberflächenaktive Substanz ein oberflächenaktives Polymer enthält, das beim Aushärten des zementhaltigen Gegenstandes seine Oberflächenaktivität irreversibel verliert.

Hierdurch wird auch die Witterungsbeständigkeit der Einfärbung der mit diesen Färbemitteln gefärbten zementhaltigen Gegenstände wesentlich verbessert, insbesondere die Entmischung von Pigmentzusammensetzungen verhindert, da auch Pigmentteilchen von verschiedener Natur miteinander verklebt werden.

Die genannte Aufgabe wird bei einem Verfahren zum Färben von zementhaltigen Gegenständen, die der Witterung ausgesetzt sind, durch Vereinigen eines Pigments und einer oberflächenaktiven Substanz mit Zement, Wasser, Zuschlagstoffen und gegebenenfalls üblichen Zusätzen dadurch gelöst, daß man als oberflächenaktive Substanz ein oberflächenaktives Polymer zugibt, das beim Aushärten des zementhaltigen Gegenstandes seine Oberflächenaktivität irreversibel verliert.

Beispiele für oberflächenaktive Stoffe gemäß dieser Erfindung sind Salze von Polyacrylsäuren, insbesondere Ammoniumsalze. Vorzugsweise wird als oberflächenaktiver Stoff ein wasserlösliches Salz, insbesondere das Ammoniumsalz eines niedermolekularen funktionellen Styrolmaleinsäureanhydrid-Copolymerisat eingesetzt, welches nach dem Eintrocknen wasserunlöslich wird und somit seine Oberflächenaktivität verliert.

Die erfindungsgemäßen oberflächenaktiven Substanzen können in Mengen von 0,05 bis 150 Gew.-%, bezogen auf Pigment, eingesetzt werden. Die Einsatzmenge richtet sich insbesondere aber nach dem Pigment. Vorzugsweise werden 0,5 bis 15 Gew.-% dieser oberflächenaktiven Substanz eingesetzt. Während prinzipiell alle Pigmente mit diesen oberflächenaktiven Substanzen, Wasser und gegebenenfalls anderen Zusatzstoffen zu einem erfindungsgemäßen Färbemittel zusammengebracht werden können, hat sich als besonders vorteilhaft erwiesen, Kohlenstoffpigmente bzw. Ruße und Gemische aus diesen mit anderen Pigmenten erfindungsgemäß zu verwenden.

Die erfindungsgemäßen Einfärbemittel weisen Vorteile auf. Durch die Inaktivierung der oberflächenaktiven Eigenschaften der verwendeten oberflächenaktiven Substanzen wird nach Aushärten und Trocknen des Betons eine Benetzung der Pigmente im eingefärbten Beton durch Wasser vermieden, was die Fixierung der Pigmente im Beton verbessert. Darüberhinaus verliert gerade der Ruß in den erfindungsgemäßen Färbemitteln nach Aushärten und Trocknen des Betons seine durch das Netzmittel bewirkte Hydrophilie, was ebenfalls zu einer Verbesserung der Fixierung führt. Zusätzlich verstopfen die Reaktionsprodukte aus den erfindungsgemäß eingesetzten oberflächenaktiven Substanzen durch Bildung von Calciumsalzen und/oder durch Bildung wasserunlöslicher und hydrophober Substanzen die Betonporen. Durch Verkleben der Pigmentteilchen selbst unterschiedlicher Größe und Dichte bei der Inaktivierung der erfindungsgemäß eingesetzten oberflächenaktiven Substanz wird einer Entmischung weiterhin vorgebeugt.

Die vorgeschriebene Wirkungsweise der Färbemittel für Beton führt nun dazu, die Wetterbeständigkeit der Einfärbung deutlich zu verbessern. Ein weiterer Vorteil dieser Erfindung besteht darin, daß Ausblühungen im Beton zurückgedrängt werden.

Besonders vorteilhaft wirkt sich die Erfindung auf die Wetterfestigkeit von rußhaltigen Färbemitteln für Beton in den obenerwähnten Fällen aus. Dies gilt sowohl für Einfärbemitteln, die Ruß als einziges Pigment beinhalten, als auch für Einfärbungen mit Färbemitteln, die Ruß in Verbindung mit anderen Pigmenten enthalten.

Die Erfindung soll anhand der folgenden Beispiele und Vergleichsbeispiele näher erläutert werden.

## Allgemeines Verfahren

Tiefgrau eingefärbte Betondachsteine wurden vergleichend der Freibewitterung ausgesetzt. Nach bestimmten Zeitabständen wurde die Oberflächenfarbe mit einer Nullprobe verglichen und bewertet.

Herstellung der Dachsteine

410 kg Zement TZ 450 und 1100 kg Kies wurden mit Einfärbemitteln wie unten angegeben, und insgesamt 144 Liter Wasser unter intensivem Mischen vereinigt. Die Mischung wurde anschließend zu Dachsteinen geformt. Die so geformten Dachsteine wurden getrocknet. Die trockenen Dachsteine wurden anschließend auf einer schattenlosen, nach Süden ausgerichteten, 45° geneigten Bewitterungsfläche ausgelegt und 18 Monate lang beobachtet und beurteilt.

Zur Beurteilung der bewitterten Dachpfannen wurden weitere Dachpfannen als Nullproben hergestellt, wie oben angegeben. Hierbei wurden jeweils 1,8; 1,2; 0,6; 0,3 Gewichtsprozent, bezogen auf eingesetzten Zement, eines handelsüblichen Farbpigments für Beton als Schwarzpigment eingesetzt. Die erzielte Tönung und ihre Bewertung lassen sich der folgenden Tabelle 1 entnehmen.

Tabelle 1

| Menge des zugesetzten Schwarzpigments (Gewichtsprozent, bezogen auf eingesetzten Zement) | Farbstufe | Farbe |
|---|---|---|
| 1,8% CARBOFIN P 516 | 6 | dunkelgrau |
| 1,2% CARBOFIN P 516 | 4 | grau |
| 0,6% CARBOFIN P 516 | 2 | mittelgrau |
| 0,3% CARBOFIN P 516 | 1 | hellgrau |

Nach Trocknung wurden die Dachpfannen im Dunkeln aufbewahrt und später bei der Beurteilung der bewitterten Dachpfannen als Farbskala-Vergleich benutzt.

CARBOFIN P 516 ist ein Standard-Schwarzeinfärbemittel der Firma Chemische Werke Brockhues AG in 6229 Walluf.

Beispiel 1

Einfärbemittel gemäß der Erfindung, bestehend aus

| | |
|---|---|
| Ruß (Type FEF) | 40 Teile |
| SMA-Harz 1440*) H | 7,5 Teile |
| Wasser | 52,5 Teile |

*) SMA-Harz 1440 ist ein niedrig molekulares, teilverestertes Styrolmaleinsäureanhydrid-Copolymerisat vom zahlenmittleren Molekulargewicht M = 2500, einem Schmelzbereich von 55 bis 75° C und der Säurezahl 175, der Firma Arco Chemical Co., Philadelphia/USA der Formel

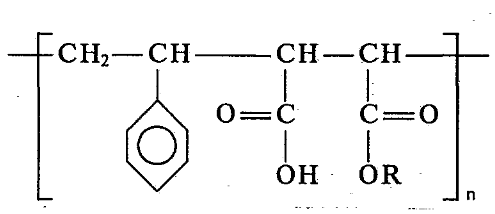

Vergleichsbeispiel 1

Einfärbemittel gemäß Stand der Technik, bestehend aus

| | |
|---|---|
| Ruß (Type FEF) | 40 Teile |
| Na-Salz des Naphthalinsulfonsäure-Formaldehyd-Kondensats | 2 Teile |
| Wasser | 58 Teile |

Erzielte Farbstufen

| | Vergleichsbeispiel 1 | Beispiel 1 |
|---|---|---|
| Bei Herstellung: | 6 | 6 |
| Nach 2 Monaten Freibewitterung: | 5 | 6 |
| Nach 7 Monaten Freibewitterung: | 3 | 4 |
| Nach 14 Monaten Freibewitterung: | 2 | 4 |

Nach 14-monatiger Bewitterung wurden die Dachpfannen aus Beispiel 1 bzw. Vergleichsbeispiel 1 30 Sek. lang in 2,5%ige verdünnte Salzsäure getaucht, um die vorhandenen Ausblühungen zu entfernen. Nach der Trocknung hatten die Pfannen des Vergleichsbeispiels eine Dunkelstufe von 4, während die Dachpfannen aus Beispiel 1 gemäß der Erfindung die Dunkelstufe 6 erreichten.

Beispiel 2 und Vergleichsbeispiel 2

Diese Beispiele werden zur Verdeutlichung der Vorteile der erfindungsgemäßen Einfärbemittel angeführt. Es wurden paarweise braune Betonprismen hergestellt, wie nachfolgend beschrieben, und anschließend auf einer schattenlosen, nach Süden gerichteten, 45° geneigten Bewitterungsfläche ausgelegt und bewittert. Ein Zwillingsprisma wurde jeweils im Dunkeln aufbewahrt. Um eine hohe Sensibilität der Prüfung zu erreichen, wurde sowohl mit sehr viel Zement und einem hohen Wasser/Zementfaktor als auch mit einem braunen Farbton gearbeitet. Als Grundfarbton wurde das Braun des Handelsprodukts Bayferrox 660 der Bayer AG, eines Eisenoxidbraunpigmentes gewählt. Gerade bei Brauntönen, die sich ja aus Eisenoxidrot und Schwarzpigmenten herstellen lassen, ist eine Konzentrationsveränderung des Schwarzpigments leicht durch eine Farbtonveränderung von Braun nach Rot zu erkennen. Dagegen ist es viel schwieriger, Veränderungen in Schwarzeinfärbungen zu beurteilen. Die in den Betonmischungen eingesetzten Pigmentpräparationen hatten die gleiche Farbstärke und den gleichen Farbton wie das als Nullvergleich eingesetzte Bayferrox 660.

Folgende Pigmentpräparationen wurden mit 4 Gewichtsprozent — bezogen auf Zement — eingesetzt:

Beispiel 2

| | |
|---|---|
| Bayferrox 110 | 26,7% |
| Bayferrox 130 | 22,0% |
| Ruß FEF | 10,4% |
| SMA-Harz*) | 4,0% |

*) siehe Anmerkung in Beispiel 1.

Vergleichsbeispiel 2a

| | |
|---|---|
| Bayferrox 660 | 100% |

Vergleichsbeispiel 2b

| | |
|---|---|
| Bayferrox 110 | 26,7% |
| Bayferrox 130 | 22,0% |
| Ruß FEF | 10,4% |
| Natrium-Salz des Naphthalinsulfonsäure-Formaldehyd-Kondensats | 1,3% |

Herstellung der braunen Betonprismen

Rezeptur:

| | |
|---|---|
| Sand 0—3 mm | 1000 g |
| Zement PZ 350 | 1000 g |
| Wasser | 340 g |
| Pigmentdispersion bzw. Pigment | 40 g |

Zur Herstellung wurde eine 3er Form für Betonprismen mit den Maßen 4 x 4 x 16 cm gefüllt. Die Füllung erfolgte in 2 Schritten. Nach dem Schritt wurde die Masse eingestampft. Nach 24 Stunden Ruhezeit wurden die Prismen entschalt, nach weiteren 28 Tagen Lagerzeit im Raum wurden sie der Bewitterung ausgesetzt. Jeweils ein Prismentyp wurde unbewittert als Nullprobe aufbewahrt. Die bewitterten Muster wurden regelmäßig beurteilt und wieder ausgelegt.

Beurteilung der bewitterten Prismen

| | Bewitterungszeit 4 Wochen | 3 Monate | 12 Monate | 20 Monate |
|---|---|---|---|---|
| Besp. 2 | leichte Abl.*) braun | leichte Abl. braun | leichte Abl. hellbraun | leichte Abl. hellbraun |
| Vgl.-Bsp. 2a | leichte Abl. braun | Abl. braun | leichte Abl. hellbraun | leichte Abl. hellbraun |
| Vgl.-Bsp. 2b | leichte Abl. braun | leichte Abl. braun | rötlich | rot |

*) Abl.: Ausblühungen

Ergebnisse

Beispiel 1 beweist insbesondere, daß es mit der vorgeschlagenen Pigmentpräparation auf Kohlenstoffbasis möglich ist, auch Betondachpfannen beständig einzufärben. Denn gerade für Betondachpfannen stellt die Einfärbung mit einer Rußpräparation eine interessante wirtschaftliche Alternative dar.

Beispiel 2 beweist die Eignung der Rußpräparationen, insbesondere in Pigmentgemischen, die Ruß und Eisenoxid enthalten, so daß hier insbesondere im Braun-Bereich durch Einsatz der Pigmentgemische aus Eisenoxiden, anderen Oxiden und Ruß beständige wirtschaftliche Einfärbungsalternativen geboten werden.

**Patentansprüche**

1. Verwendung eines Färbemittels für zementhaltige Gegenstände, die der Witterung ausgesetzt sind, enthaltend mindestens ein Pigment, eine oberflächenaktive Substanz und gegebenenfalls andere Zusätze, dadurch gekennzeichnet, daß man als oberflächenaktive Substanz ein oberflächenaktives Polymer verwendet, das beim Aushärten des zementhaltigen Gegenstandes seine Oberflächenaktivität irreversibel verliert, und das Färbemittel zu einer Mischung aus Zement, Wasser, Zuschlagstoffen und gegebenenfalls üblichen Zusätzen gibt.

2. Verwendung nach Anspruch 1, dadurch gekennzeichnet, daß man als oberflächenaktive Substanz ein polyfunktionelles Styrol-Maleinsäureanhydrid-Copolymerisat zugibt.

**Claims**

1. Use of a colouring agent for cement-containing substances, which are exposed to the weather, consisting of at least one pigment, a surfactant substance and if necessary other additions, characterised in that a surfactant polymer is used as the surfactant substance, and in that during hardening of the cement-containing substance its surface activity is irreversibly lost, and in that the colouring agent is added to a mixture of cement, water, supplementary materials and if necessary usual additions.

2. Use according to claim 1, characterised in that a polyfunctional styrol-maleic anhydride copolymeriser is added as surfactant substance.

**Revendications**

1. Utilisation d'un colorant pour des objets composés de ciment et exposés à toutes les conditions climatiques, qui contient au moins un pigment, une substance tensio-active et, en tant que de besoin, d'autres additifs, caractérisée en ce que la substance tensio-active du colorant est constituée par un polymère tensio-actif qui perd irréversiblement son activité de surface lors du durcissement de l'objet contenant du ciment, et en ce que le colorant est ajouté à un mélange de ciment, d'eau, de granulats et, en tant que de besoin, d'additifs usuels.

2. Utilisation selon la revendication 1 caractérisée en ce que la substance tensio-active du colorant est constituée d'un copolymère styrène-acide maléique à fonctions multiples.